# EUROPÄISCHE PATENTSCHRIFT

(11) **EP 1 227 555 B1**
(45) Veröffentlichungstag und Bekanntmachung des Hinweises auf die Patenterteilung: **29.09.2010**
(21) Anmeldenummer: 02001540.0
(22) Anmeldetag: 23.01.2002
(51) Int. Cl.: H02K 5/22, H02K 5/14, H01R 39/38

(54) **Schraubenanschlusseinrichtung für Kabelschuhe zur Kontaktierung von Kraftfahrzeug-Startermotoren**
Screwed contact of electric cable lugs for a vehicle starter motor
Connexion vissée de cosses de câbles électriques de commutation pour un démarreur d'automobile

(30) Priorität: 24.01.2001 DE 10103008
(43) Veröffentlichungstag der Anmeldung: 31.07.2002
(73) Patentinhaber: ROBERT BOSCH GMBH, 70442 Stuttgart (DE)
(72) Erfinder: Lindoerfer, Steffen, 74575 Schrozberg (DE); Richter, Ingo, 71706 Markgroeningen (DE)

(56) Entgegenhaltungen:
- GB-A- 1 375 722
- US-A- 3 739 323
- US-A- 3 850 501
- US-A- 4 362 351
- US-A- 4 926 078

## Beschreibung

Die Erfindung betrifft eine Schraubanschlußeinrichtung für Kabelschuhe zur Kontaktierung von Kraftfahrzeug-Startermotoren mit einem Motorgehäuse und einer deckelartig darin sitzenden Bürstenplatte.

Zum Hintergrund der Erfindung ist festzuhalten, daß bei üblichen Startern von Kraftfahrzeugen die notwendige elektrische Verbindung zwischen dem Starterrelais und dem Startermotor durch eine einfache Stromschiene aus Bandblech mit angeschweißter Litze zu den Kommutatorbürsten und einen entsprechenden Kabelschuh realisiert wird. Die Stromschiene sitzt dabei in der Bürstenplatte und ist über eine Gummidichtung geführt.

Bei einer in der DE 298 01 079 U1 gezeigten Kontaktierung sind die Anschlußlitzen für die Bürstenkohlen des dortigen Startermotors direkt durch eine Dichtung am Rande des Motorgehäuses hindurchgeführt und außenseitig mit einem Kabelschuh am Relais verbunden.

Ferner ist in dieser Druckschrift eine zweite Ausführungsform gezeigt, in der die Litzen innerhalb des Startermotor-Gehäuses an eine Anschlußfahne angeschweißt sind, die wiederum eine Öffnung im Gehäuse unter Durchtritt durch einen Dichtungskörper nach außen durchgreift.

Bei den vorstehend erörterten Anschlüssen des Startermotors sitzt die Dichtung für die Stromdurchführung in einer zur Seite hin offenen Ausnehmung des Motorgehäuses, so daß sich eine übliche Montagefolge eingebürgert hat. Es werden nämlich in dieser Reihenfolge das Polgehäuse, der Anker, der Bürstenhalter, das Kommutatorlager sowie diverse Anlauf-, Dicht- und Sicherungsscheiben gesetzt, wonach schließlich eine Verschlußkappe aufgeschraubt wird. Mit diesen Schrauben wird gleichzeitig der Bürstenhalter befestigt.

Die die Durchführung der Anschlußlitzen bzw. Anschlußfahne des Startermotors abdichtende Gummidichtung wird dabei durch das eingesetzte Kommutatorlager beaufschlagt und beim Verschrauben verspannt, womit sie in ihrem Sitz sehr dicht gehalten wird. Insgesamt ist also für eine dichte und elastische Verbindung gesorgt.

Jüngste Entwicklungen in der Startertechnik sehen nun möglichst kompakte Bauformen von Kraftfahrzeugstartern vor, die durch sogenannte "koaxiale Starter" realisiert werden. Bei diesen Starter-Typen ist ein Anbau des Relais außerhalb bzw. entfernt vom eigentlichen Starter möglich und vorgesehen. Es handelt sich hier um sogenannte "Wegbau-Relais". Dies macht es erforderlich, daß die mechanische Befestigung des Relais und seine elektrische Verbindung zum Starter beim Automobil-Produzenten hergestellt werden können. Daher ist ein Anschweißen einer Anschlußleitung nicht mehr möglich, da durch thermische Einflüsse Dichtungen und andere Kunststoffteile im Starter beschädigt werden können.

Ferner wird aus Gründen einer möglichst rationellen Montage bei Starter-Neuentwicklungen angestrebt, eine Verbindung von Antriebslager zu Elektromotormodul des Starters möglichst ohne Polgehäuse-Schrauben umzusetzen. Die Verbindung soll vielmehr lösbar über eine Art Spannring oder unlösbar über Verschweißen, Bördeln o.ä. Verfahren erfolgen.

In beiden Fällen kann die eingangs erörterte Montage in axialer Richtung und die damit verbundene Verspannung der Dichtung in einer seitlich offenen Gehäuse-Ausklinkung nicht mehr erfolgen.

Außerdem hätte eine einseitig offene Ausklinkung negative Auswirkungen auf die Rundheit des Gehäuses. Da die Bürstenplatte in diesem Gehäuse geführt wird, sind deshalb Koaxialitätsabweichungen und Rundlauffehler zu erwarten.

Grundsätzlich kann für die elektrische Verbindung zwischen Starterrelais und Startermotor das Prinzip einer Schaubanschlußklemme vorgesehen sein. Dabei wird aus Sicherheits- und Zuverlässigkeitsgründen ein bestimmtes Anzugsmoment von beispielsweise 20 Nm für die Verschraubung gefordert, was eine Abstützung dieser hohen Anzugsmomente über das Motorgehäuse notwendig macht. Dies ist bei der offenen Ausklinkung, wie sie beim Stand der Technik zur Durchführung der Motor-Anschlußelemente verwendet wird, problematisch.

Der Erfindung liegt nun die Aufgabe zugrunde, eine Schraubanschlußeinrichtung der gattungsgemäßen Art so zu verbessern, daß eine radiale Montage durch eine umfangsseitig geschlossene Gehäuseausnehmung im Motorgehäuse möglich wird.

Diese Aufgabe wird durch die im Kennzeichnungsteil des Anspruches 1 angegebene mehrteilige Ausführung einer solchen Schraubanschlußeinrichtung gelöst. Demnach ist vorgesehen
- eine mit Bürstenlitzen des Motors elektrisch verbindbare, an der Bürstenplatte befestigbare Stromschiene,
- eine in einer Aufnahme an der Stromschiene mit Lagespiel quer zu ihrer Schraubachse drehfest sitzende Haltemutter, wobei Stromschiene und Haltemutter als Baugruppe innerhalb des Motorgehäuses angeordnet sind,
- eine koaxial mit der Haltemutter angeordnete, drehfest in einer umfangsseitig geschlossenen Gehäuseausnehmung sitzende Dichthülse,
- eine in der Dichthülse sitzende, mit dieser und der Haltemutter drehfest verbindbare Kontakthülse, und
- eine in die Haltemutter unter gegenseitigem Verspannen der Haltemutter, der Dichthülse und der Kontakthülse einschraubbare Spannschraube für einen Kabelschuh.

Wie durch die Beschreibung des Ausführungsbeispiels noch näher deutlich wird, findet beim Zusammenbau eines solchen Startermotors mit Wegbaurelais zwangsläufig eine "verdeckte" Montage der Anschlußbauteile statt, wobei die aus Stromschiene und Haltemutter bestehende Baugruppe innerhalb des Motorgehäuses angeordnet ist. Von außen werden dann die Dichthülse, die Kontakthülse und die Spannschraube eingesetzt und mit der Haltemutter verschraubt. Durch die koaxiale Anordnung der Haltemutter und der Dichthülse, die mit Lagespiel quer zu ihrer Schraubachse sitzende Haltemutter und - in an sich bekannter Weise - durch großzügig dimensionierte Fasen an den gegenseitig zu fügenden Teilen wird ein leichter und problemloser Zusammenbau erreicht. Dabei wird durch diese Vorzentrierung ferner beim Ansetzen der Spannschraube ein Verkanten zwischen dieser und dem Gewinde der Haltemutter vermieden. Somit ist ein eventuelles "Festfressen" dieser beiden Teile beim Verschrauben praktisch ausgeschlossen.

Ferner wird durch die durchgehend drehfeste Kopplung zwischen Haltemutter, deren Aufnahme, Dichthülse, Kontakthülse und Gehäuseausnehmung beim Anziehen der Spannschraube das Anzugsmoment am Mötormantel über die umfangsseitig geschlossene Gehäuseausnehmung abgestützt. Gegenüber dem Stand der Technik kehrt sich der Kraftschluß damit praktisch um und es können höhere Drehmomente aufgenommen werden im Vergleich zur Abstützung über die Stromschiene. In letzterem Fall könnte nämlich ein mögliches zu starkes Anziehen einen Kontakt zwischen der Stromschiene und der Bürstenplatte zur Folge haben, was sich beim Schließen des Stromkreises mit einem Kurzschluß bemerkbar machen würde.

Schließlich ist bei der erfindungsgemäßen Konzeption von Vorteil, daß sich durch die eingesetzte Kontakthülse eine verbesserte elektrische Anbindung ergibt. Die Hülse bietet nämlich einen weitaus größeren Leitungsquerschnitt im Vergleich zur Situation, wenn der elektrische Strom nur über den Kontakt zwischen den Gewindegängen von Spannschraube und Haltemutter geleitet wird. Insgesamt ist also der Innenwiderstand der erfindungsgemäßen Schraubanschlußeinrichtung weitaus geringer als beim Stand der Technik.

Gemäß einer bevorzugten Ausführungsform ist eine Distanzhülse zwischen Stromschiene und Motorgehäuse auf der Dichthülse vorgesehen. Diese ist vorzugsweise klemmend auf der Stromschiene z.B. durch ausgebogene Stanzzungen gehalten und gehört zur Baugruppe von Stromschiene und Haltemutter. Sie kann aus flexiblem Isoliermaterial gebildet sein. Durch die damit gegebene Nachgiebigkeit wird beim Zusammenschrauben der Schraubanschlußeinrichtung die Stromschiene gegen das Motorgehäuse gezogen und vibrationsfest isoliert. Gleichzeitig sorgt diese Distanzhülse durch ihre Elastizität und die damit mögliche radiale Aufweitung für ein radiales Verspannen der auf ihr sitzenden Dichthülse gegen die Begrenzungskante der umliegenden Gehäuseausnehmung, so daß deren Dichtwirkung zusätzlich gefördert wird.

Weitere vorteilhafte Ausführungsformen beziehen sich auf konstruktive Einzelheiten, die das notwendige Spiel der zu fügenden Teile zueinander bzw. die drehfeste Abstützung und Aufnahme des Anzugsmomentes der Spannschraube fördern.

Weitere Merkmale, Einzelheiten und Vorteile der Erfindung ergeben sich aus der nachfolgenden Beschreibung, in der ein Ausführungsbeispiel des Erfindungsgegenstandes anhand der beigefügten Zeichnungen näher erläutert wird. Es zeigen:
- Fig. 1: eine perspektivische Explosionsdarstellung einer Schrauban- schlußeinrichtung ohne Motorgehäuse und Bürstenplatte,
- Fig. 2: eine perspektivische Explosionsdarstellung der Schraubanschlußein- richtung gemäß Fig. 1 in ihrer Anbaulage an eine Bürstenplatte,
- Fig. 3: eine perspektivische Detailansicht einer Stromschiene mit darin gelagerten Haltemuttern, und
- Fig. 4: eine perspektivische Darstellung eines Startermotors mit den äuße- ren Teilen der Schraubanschlußeinrichtung in einer Montage- Zwischenposition.

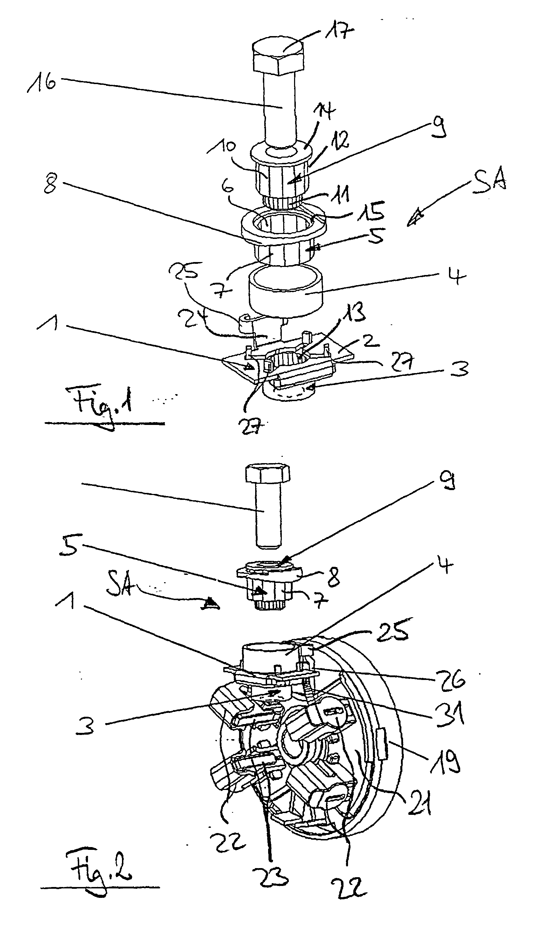

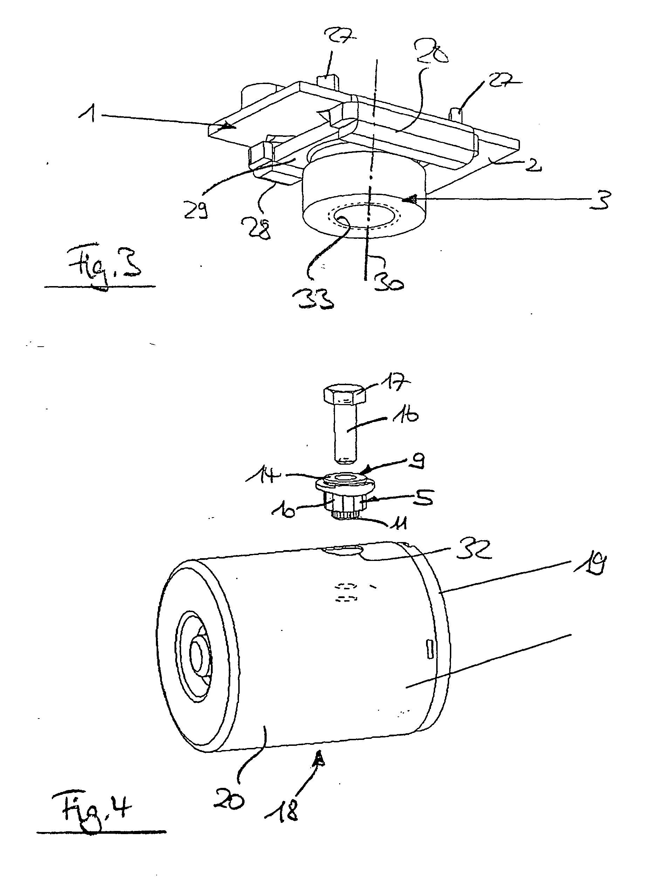

Aus Fig. 1 werden die Hauptelemente einer Schraubanschlußeinrichtung SA deutlich. So ist eine Stromschiene 1 vorgesehen, die an der Unterseite ihres im wesentlichen plattenförmigen, rechteckigen Zentralteils 2 eine Haltemutter 3 trägt. Deren Verbindung wird im folgenden unter Bezugnahme auf Fig. 3 noch näher erläutert.

Auf dem Zentralteil 2 sitzt eine Distanzhülse 4, die als glatter, zylindrischer Ring aus isolierendem, nachgiebigen Kunststoffmaterial gebildet ist. Stromschiene 1, Haltemutter 3 und Distanzhülse 4 bilden die inneren Bauteile der Schraubanschlußeinrichtung.

In die Distanzhülse 4 ist von außen eine Dichthülse 5 einführbar, die ebenfalls aus isolierendem Kunststoffmaterial besteht. Diese Dichthülse 5 ist im Bereich ihrer inneren und äußeren Mantelflächen 6, 7 jeweils mit polygonalen Innen- bzw. Außenflächen versehen, so daß sie im Querschnitt beispielsweise einen Zwölfkant bildet. An ihrem äußeren Ende weist die Dichthülse 5 schließlich einen umlaufenden, nach außen abstehenden Kragen 8 auf.

Ferner ist eine Kontakthülse 9 vorgesehen, die in die Dichthülse 5 von auβen einführbar ist. Diese Kontakthülse 9 ist mit einem Schaftteil 10 versehen, dessen polygonale Außenkontur mit der inneren Mantelfläche 6 der Dichthülse 5 formschlüssig ineinandergreift. Der Schaftteil 10 bildet also ebenfalls einen Zwölfkant. Am Innenende des Schaftteils 10 ist ein im Durchmesser engerer, ringförmiger Vorsprung 11 angeformt, dessen äußere Mantelfläche ebenfalls einen polygonalen Charakter aufweist und beispielsweise einen Sechzehnkant bildet. Mit dieser Außenfläche 12 greift der Vorsprung 11 der Kontakthülse 9 in eine entsprechend geformte Ausnehmung 13 in der Oberseite der Haltemutter 3 unter Formschluß ein.

An ihrem äußeren Ende ist die Kontakthülse 9 mit einer schmalen, nach außen abstehenden Ringschulter 14 versehen, die mit einer entsprechend geformten Ringnut 15 an der Innenseite des Kragens 8 der Dichthülse 5 kooperiert.

Die Schraubanschlußeinrichtung SA wird durch die Spannschraube 16 komplettiert, bei der es sich um eine übliche Maschinenschraube mit Sechskant-Kopf 17 handelt. Durch Verwendung einer Sechskantschraube mit Einführzapfen wird die Montage erleichtert.

Wie nun aus Fig. 2 und 3 deutlich wird, wird bei der Montage des in Fig. 4 dargestellten Startermotors 18 von der Bürstenplatte 19 ausgegangen. Diese Bürstenplatte 19 ist deckelartig ausgebildet und wird in ihrer Montageposition (Fig. 4) in die Offenseite des topfförmigen Motorgehäuses 20 eingesetzt. An ihrer Innenseite 21 ist die Bürstenplatte 19 in üblicher Weise mit Bürstenfassungen 22 versehen, die die einzelnen Kohlen 23 federnd lagern. Zum Anschluß der Plus-Kohlen 23 dient die erörterte Schraubanschlußeinrichtung SA. Dazu wird die Stromschiene 1 mit der Haltemutter 3 und deren Distanzhülse 4 mit Hilfe einer an das Zentralteil 2 seitlich einstückig angeformte Montagefahne 24 befestigt. Letztere weist an ihren Enden Klammern 25 auf, mit denen die Montagefahne 24 auf einen isolierenden Haltesteg 26 an der Innenseite de Bürstenplatte 19 aufgeschoben wird. In dieser in Fig. 3 gezeigten, vorkonfektionierten Montageposition ist das Zentralteil 2 mit Hilfe der Klammern 25 zwar verliersicher auf dem Haltesteg 26 gehalten, jedoch kann die Stromschiene 1 noch radial nach außen verlagert werden. Sie besitzt also Radialspiel.

Desgleichen ist die Distanzhülse 4 zwischen entsprechende, aus dem Zentralteil 2 ausgestanzte und nach oben gebogene Stanzzungen 27 unter leichter Spannung eingesetzt und damit ebenfalls verliersicher gehalten. Die Haltemutter 3 wird - wie aus Fig. 3 deutlich wird - an der Unterseite des Zentralteils 2 mit Hilfe von seitlich an das Zentralteil 2 abgeformten, käfigartig umgebogenen Haltelappen 28 fixiert, wobei die Dimensionierung der Haltelappen 28 und eines plattenförmigen Schulteransatzes 29 der Haltemutter 3 so ausgelegt sind, daß sich letztere leichtgängig quer zur Schraubachse 30 mit großem Spiel bewegen kann.

Ausgehend von der in Fig. 2 gezeigten Zwischenmontage-Position wird die Stromschiene 1 über eine daran angeschweißte Litze 31 elektrisch mit den Kohlen 23 der Bürstenplatte 19 verbunden. Danach wird die Einheit aus Bürstenplatte 19 und Schraubanschlußeinrichtung SA in das offene Ende des Motorgehäuses 20 eingeschoben und dort beispielsweise durch Verschweißen dauerhaft fixiert. In dieser Stellung kommt das Zentralteil 2 mit Haltemutter 3 und Distanzhülse 4 radial unterhalb der Gehäuseausnehmung 32 des Motorgehäuses 20 zu liegen. Es wird dann - wie in Fig. 4 angedeutet ist - zuerst die Dichthülse 5 von oben eingeführt, deren polygonale äußere Mantelfläche 7 formschlüssig mit der Gehäuseausnehmung 32 in Eingriff gelangt. Die Gehäuseausnehmung 32 weist nämlich einen entsprechenden, beispielsweise zwölfkantigen geschlossenen Polygonzug als Begrenzungsfläche auf. Damit ist die Dichthülse 5 drehfest gegenüber dem Motorgehäuse 19 fixiert.

Anschließend wird die Kontakthülse 9 in die Dichthülse 5 eingeführt, wobei der Vorsprung 11 der Kontakthülse 9 in die entsprechende Ausnehmung 13 der Haltemutter 3 eingreift. Falls Haltemutter 3 und Kontakthülse 9 dabei nicht sauber fluchten, wird die Fügbarkeit der beiden Teile durch nicht näher dargestellte, großzügige Fasen an den ineinandergreifenden Teilen und das leichtgängige Spiel der Haltemutter 3 quer zur Schraubachse erleichtert.

Schließlich wird die Spannschraube 16 in die Kontakthülse 9 eingeführt und mit dem Innengewinde 33 der Haltemutter 3 verschraubt. Das gesamte Anzugsmoment wird dabei über die drehfeste Kopplung zwischen Kontakthülse 9 und Dichthülse 5 einerseits sowie Dichthülse 5 und Gehäuseausnehmung 32 andererseits auf die geschlossene Gehäuseausnehmung 32 übertragen und sauber abgestützt. Damit kann ein hohes Anzugsmoment aufgewendet werden.

Bei der Endmontage eines Fahrzeuges bei einem Automobil-Hersteller wird die Spannschraube 16 aufgedreht und zwischen deren Kopf 17 und der Ringschulter 14 der Kontakthülse 9 ein Kontaktschuh eingesetzt und festgeschraubt, der mit dem Wegbaurelais des Kraftfahrzeug-Startermotors verbunden ist.

## Patentansprüche

1. Schraubanschlußeinrichtung für Kabelschuhe zur Kontaktierung von Kraftfahrzeug-Startermotoren mit einem Motorgehäuse (20) und einer deckelartig darin sitzenden Bürstenplatte (19), **gekennzeichnet durch**
- eine mit Bürstenlitzen (31) des Motors (18) elektrisch verbindbare, an der Bürstenplatte (19) befestigbare Stromschiene (1),
- eine in einer Aufnahme (28) an der Stromschiene (1) mit Lagespiel quer zu ihrer Schraubachse (30) drehfest sitzenden Haltemutter (3), wobei Stromschiene (1) und Haltemutter (3) als Baugruppe innerhalb des Motorgehäuses (20) angeordnet sind,
- eine koaxial mit der Haltemutter (3) angeordnete, drehfest in einer umfangsseitig geschlossenen Gehäuseausnehmung (32) sitzende Dichthülse (5),
- eine in der Dichthülse (5) sitzende, mit dieser und der Haltemutter (3) drehfest verbindbare Kontakthülse (9), und
- eine in die Haltemutter (3) unter gegenseitigem Verspannen der Haltemutter(3), der Dichthülse (5) und der Kontakthülse (9) einschraubbare Spannschraube (16) für einen Kabelschuh.

2. Schraubanschlußeinrichtung nach Anspruch 1, **dadurch gekennzeichnet, daß** zwischen Stromschiene (1) und Motorgehäuse (20) eine Distanzhülse (4) auf der Dichthülse (5) sitzt.

3. Schraubanschlußeinrichtung nach Anspruch 2, **dadurch gekennzeichnet, daß** die Distanzhülse (4) zur Baugruppe von Stromschiene (1) und Haltemutter (3) gehörend klemmend auf der Stromschiene (1) gehalten ist.

4. Schraubanschlußeinrichtung nach Anspruch 3, **dadurch gekennzeichnet, daß** die aus flexiblem Isoliermaterial gebildete Distanzhülse (4) auf aus der Stromschiene (1) ausgebogenen Stanzzungen (27) gehalten ist.

5. Schraubanschlußeinrichtung nach einem der Ansprüche 1 bis 4, **dadurch gekennzeichnet, daß** die Haltemutter (3) einen plattenförmigen Schulteransatz (29) aufweist, der in der Aufnahme (28) an der Stromschiene (1) unter Spiel gehalten ist.

6. Schraubanschlußeinrichtung nach einem der Ansprüche 1 bis 4, **dadurch gekennzeichnet, daß** die drehfeste Verbindung von Dichthülse (5) zu Gehäuseausnehmung (32), von Dichthülse (5) zu Kontakthülse (9) und/oder von Kontakthülse (9) zu Haltemutter (3) jeweils durch formschlüssig ineinandergreifende, vorzugsweise polygonale Innen- und Außenkonturen dieser Fügepartner realisiert ist.

7. Schraubanschlußeinrichtung nach einem der Ansprüche 1 bis 6, **dadurch gekennzeichnet, daß** die Baugruppe aus Stromschiene (1), Haltemutter (3) und gegebenenfalls Distanzhülse (4) unter Radialspiel auf eine Halterung (26) an der Bürstenplatte (19) aufgesteckt ist.

## Claims

1. Screw connection device for cable shoes for making contact with motor vehicle starter motors having a motor housing (20) and a brush plate (19) which is seated in the motor housing in the manner of a cover, **characterized by**
- a busbar (1) which can be electrically connected to brush litz wires (31) of the motor (18) and can be mounted on the brush plate (19),
- a retaining nut (3) which is seated in a rotationally fixed manner in a receptacle (28) on the busbar (1) with positional play transverse to the screw axis (30) thereof, with the busbar (1) and the retaining nut (3) being arranged as an assembly within the motor housing (20),
- a sealing sleeve (5) which is arranged coaxially with the retaining nut (3) and is seated in a rotationally fixed manner in a housing recess (32) which is peripherally closed,
- a contact sleeve (9) which is seated in the sealing sleeve (5) and can be connected to the said sealing sleeve and the retaining nut (3) in a rotationally fixed manner, and
- a clamping screw (16), which can be screwed into the retaining nut (3) with mutual bracing of the retaining nut (3), the sealing sleeve (5) and the contact sleeve (9), for a cable shoe.

2. Screw connection device according to Claim 1, **characterized in that** a spacer sleeve (4) is seated on the sealing sleeve (5) between the busbar (1) and the motor housing (20).

3. Screw connection device according to Claim 2, **characterized in that** the spacer sleeve (4) is retained on the busbar (1) in a clamping manner as part of the assembly comprising the busbar (1) and retaining nut (3).

4. Screw connection device according to Claim 3, **characterized in that** the spacer sleeve (4) which is formed from flexible insulating material is retained on punched tongues (27) which are bent out of the busbar (1).

5. Screw connection device according to one of Claims 1 to 4, **characterized in that** the retaining nut (3) has a plate-like shoulder projection (29) which is retained with play in the receptacle (28) on the busbar (1).

6. Screw connection device according to one of Claims 1 to 4, **characterized in that** the rotationally fixed connection of the sealing sleeve (5) to the housing recess (32), of the sealing sleeve (5) to the contact sleeve (9) and/or of the contact sleeve (9) to the retaining nut (3) is established in each case by preferably polygonal inner and outer contours of said mating parts which engage one in the other in an interlocking manner.

7. Screw connection device according to one of Claims 1 to 6, **characterized in that** the assembly comprising the busbar (1), the retaining nut (3) and possibly the spacer sleeve (4) is fitted onto a mount (26) on the brush plate (19) with radial play.

## Revendications

1. Dispositif de raccordement vissé de cosses de câbles pour le contact de moteurs de démarrage de véhicules automobiles, comprenant un carter moteur (20) et une plaque à balais (19) reposant en forme de couvercle à l'intérieur, **caractérisé par**
- un rail conducteur (1) pouvant être connecté électriquement à des brins de balais (31) du moteur (18), pouvant être fixé sur la plaque à balais (19),
- un écrou de fixation (3) reposant de manière solidaire en rotation dans un logement (28) sur le rail conducteur (1) avec un jeu transversalement à son axe de vissage (30), le rail conducteur (1) et l'écrou de fixation (3) étant disposés en tant que module à l'intérieur du carter moteur (20),
- une douille d'étanchéité (5) disposée coaxialement à l'écrou de fixation (3), reposant de manière solidaire en rotation dans un logement de boîtier (32) fermé du côté périphérique,
- une douille de contact (9) reposant dans la douille d'étanchéité (5), pouvant être connectée de manière solidaire en rotation à celle-ci et à l'écrou de fixation (3), et
- une vis de serrage (16) pour une cosse de câble, pouvant être vissée dans l'écrou de fixation (3) en serrant mutuellement l'écrou de fixation (3), la douille d'étanchéité (5) et la douille de contact (9).

2. Dispositif de raccordement vissé selon la revendication 1, **caractérisé en ce qu'**une douille d'espacement (4) repose sur la douille d'étanchéité (5) entre le rail conducteur (1) et le carter moteur (20).

3. Dispositif de raccordement vissé selon la revendication 2, **caractérisé en ce que** la douille d'espacement (4), appartenant au module du rail conducteur (1) et de l'écrou de fixation (3), est maintenue par serrage sur le rail conducteur (1).

4. Dispositif de raccordement vissé selon la revendication 3, **caractérisé en ce que** la douille d'espacement (4) formée en matériau isolant flexible est maintenue sur des langues estampées (27) dépliées du rail conducteur (1).

5. Dispositif de raccordement vissé selon l'une quelconque des revendications 1 à 4, **caractérisé en ce que** l'écrou de fixation (3) présente un insert d'épaulement en forme de plaque (29), qui est maintenu avec jeu dans le logement (28) sur le rail conducteur (1).

6. Dispositif de raccordement vissé selon l'une quelconque des revendications 1 à 4, **caractérisé en ce que** la connexion solidaire en rotation de la douille d'étanchéité (5) avec le logement de boîtier (32), de la douille d'étanchéité (5) avec la douille de contact (9) et/ou de la douille de contact (9) avec l'écrou de fixation (3) est réalisée à chaque fois par des contours internes et externes de ces partenaires d'assemblage venant en prise les uns dans les autres, de préférence de forme polygonale.

7. Dispositif de raccordement vissé selon l'une quelconque des revendications 1 à 6, **caractérisé en ce que** le module constitué du rail conducteur (1), de l'écrou de fixation (3) et éventuellement de la douille d'espacement (4) est enfiché avec jeu radial sur une fixation (26) sur la plaque à balais (19).
